# EUROPEAN PATENT APPLICATION

(11) **EP 4 647 520 A1**
(43) Date of publication of application: **12.11.2025**
(21) Application number: 24744382.3
(22) Date of filing: 19.01.2024
(51) Int. Cl.: C22B 23/00

(54) **METHOD FOR REMOVING IMPURITIES FROM COBALT SOLUTION**

(30) Priority: 20.01.2023 CN 202310091014
(71) Applicant: Huawei Technologies Co., Ltd., Shenzhen, Guangdong 518129 (CN)
(72) Inventor: HAN, Zuoyan, Shenzhen, Guangdong 518129 (CN); LIU, Xinyu, Shenzhen, Guangdong 518129 (CN); ZENG, Li, Changsha, Hunan 410083 (CN); WU, Xinsheng, Changsha, Hunan 410083 (CN); ZHANG, Shuanglong, Changsha, Hunan 410083 (CN); ZHANG, Guiqing, Changsha, Hunan 410083 (CN); WU, Shengxi, Changsha, Hunan 410083 (CN)
(74) Representative: Epping - Hermann - Fischer
(86) International application number: PCT/CN2024/073150
(87) International publication number: WO 2024/153212

(57) **Abstract**

A method for removing impurities from a cobalt solution is provided, including: filling a column with adsorption resin, and passing a cobalt solution through the column to adsorb cadmium ions from the cobalt solution onto the resin; or adding adsorption resin to a cobalt solution for static adsorption, to adsorb cadmium ions from the cobalt solution onto the resin, where the cobalt solution is an acidic cobalt solution containing the cadmium ions, and the adsorption resin is thioureido- or isothioureido-containing adsorption resin. The cobalt solution is subjected to impurity removal by using the adsorption resin of a specific structure. The impurity removal process is easy to operate and achieves a high cadmium removal rate.

## Description

This application claims priority to Chinese Patent Application No. 202310091014.8, filed with the China National Intellectual Property Administration on January 20, 2023, and entitled "METHOD FOR REMOVING IMPURITIES FROM COBALT SOLUTION", which is incorporated herein by reference in its entirety.

### TECHNICAL FIELD

Embodiments of this application relate to the field of technologies for removing impurities from a solution, and in particular, to a method for removing impurities from a cobalt solution.

### BACKGROUND

Cobalt is an important strategic metal widely used in aerospace, electrical machinery, machinery, chemical engineering, ceramics, batteries, and other fields. High-purity cobalt possesses excellent semiconductor properties, magnetic properties, and electrical conductivity, making it a crucial material for preparing magnetic recording media, magnetic recording heads, optoelectronic devices, integrated circuits for magnetic sensors, and other components. High-purity cobalt of 5N purity or above is primarily used to make sputtering targets for the very large-scale integrated circuit industry.

At present, purification methods for removing impurities from a cobalt sulfate solution primarily include a chemical precipitation method, an ion exchange method, and a solvent extraction method, primarily for removing metal impurities (such as copper, iron, zinc, aluminum, manganese, calcium, magnesium, and nickel) from the cobalt sulfate solution. Then, the cobalt solution with the impurities removed is subjected to electrolysis to obtain a high-purity cobalt metal. In a process of purification and removal of impurities, cadmium, a metal element with high biotoxicity, has special chemical properties, making it difficult to purify and separate. Currently, methods for removing cadmium from a cobalt sulfate solution primarily include cadmium precipitation by sulfidation, deep cadmium removal by N235 extraction, and the like. However, these methods involve complex operations and high costs, and in some methods, other impurity ions may be further introduced, and a concentration of cadmium ions is hardly to be reduced to a ppb level.

### SUMMARY

In view of this, embodiments of this application provide a method for removing impurities from a cobalt solution. According to the method for removing impurities, cadmium ions are removed from the solution by using adsorption resin of a specific structure. The impurity removal process is easy to operate and achieves a high cadmium removal rate.

Specifically, a first aspect of embodiments of this application provides a method for removing impurities from a cobalt solution, including:
filling a column with adsorption resin, and passing a cobalt solution through the column to adsorb cadmium ions from the cobalt solution onto the resin; or
adding adsorption resin to a cobalt solution for static adsorption, to adsorb cadmium ions from the cobalt solution onto the resin, where
the cobalt solution is an acidic cobalt solution containing the cadmium ions, and the adsorption resin is thioureido (-NH-C(=S)-NH₂)- or isothioureido (-S-C(=NH)NH₂)-containing adsorption resin.

The adsorption resin in this application is thioureido (-NH-C(=S)-NH₂)- or isothioureido (-S-C(=NH)NH₂)-containing macroporous adsorption resin. The macroporous adsorption resin is a separation material that combines principles of adsorption and screening, and has a good macroporous mesh structure and a large specific surface area. The macroporous adsorption resin can be used to perform physical adsorption based on the large specific surface area through the van der Waals force between the macroporous adsorption resin and adsorbed molecules (adsorbate). In embodiments of this application, cadmium impurity ions are removed from the acidic cobalt solution by using the macroporous adsorption resin of a specific thioureido- or isothioureido-containing structure, so that the cadmium impurity ions can be selectively removed through a simple adsorption operation process. This cadmium removal method has a simple process and a high cadmium removal rate. In addition, for an acidic cobalt solution containing cadmium ions with a high concentration of cobalt ions, selective cadmium adsorption can also be implemented by using the macroporous adsorption resin of the specific thioureido- or isothioureido-containing structure in this application, to reduce a concentration of the cadmium impurity ions in the cobalt solution to a ppb (parts per billion) level, thereby resolving problems in the conventional technology of incomplete cadmium separation from an acidic cobalt solution containing cadmium ions, and a complex operation process.

In an implementation of this application, the adsorption resin is thioureido- or isothioureido-containing macroporous adsorption resin of a styrene-divinylbenzene copolymer. The cadmium ions can be well removed selectively from the cobalt solution by using the thioureido- or isothioureido-containing macroporous adsorption resin of the styrene-divinylbenzene copolymer, achieving excellent cadmium removal effect.

In an implementation of this application, the adsorption resin has a specific surface area of 500 m²/g to 1500 m²/g and an average pore size of 0.3 mm to 1.5 mm. The specific surface area is for each gram of dry resin. The adsorption resin has an appropriate specific surface area and an appropriate average pore size, facilitating adsorption and removal of the cadmium ions from the cobalt solution.

In an implementation of this application, the adsorption resin is spherical particles, and the adsorption resin has a volumetric exchange capacity greater than or equal to 1.0 mmol/mL and a water content of 40% to 60%. The adsorption resin has a large volumetric exchange capacity and an appropriate water content, facilitating adsorption and removal of the cadmium ions from the cobalt solution.

In an implementation of this application, the acidic cobalt solution containing the cadmium ions includes a cobalt sulfate solution containing the cadmium ions, a cobalt chloride solution containing the cadmium ions, a cobalt nitrate solution containing the cadmium ions, or a cobalt acetate solution containing the cadmium ions. Good cadmium removal effect can be achieved by using the thioureido- or isothioureido-containing macroporous adsorption resin for the acidic cobalt solutions of different systems containing cadmium ions, thereby meeting application requirements for removing cadmium from various cobalt solutions.

In an implementation of this application, in the acidic cobalt solution containing the cadmium ions, a concentration of cobalt ions is 1 g/L to 100 g/L, and a concentration of the cadmium ions is less than or equal to 5.0 g/L. By using the thioureido- or isothioureido-containing macroporous adsorption resin in embodiments of this application, cadmium ions can be removed from acidic cobalt solutions with different concentrations of cobalt ions, different concentrations of cadmium ions, and different cobalt-cadmium relative concentrations, and good cadmium removal effect can also be achieved for a cobalt solution with a high concentration of cobalt ions.

In an implementation of this application, pH of an effluent after passing through the column is 2.0 to 5.0; and pH of a mixed solution obtained by adding the adsorption resin to the cobalt solution is 2.0 to 5.0. The pH of the effluent and the pH of the mixed solution are controlled within an appropriate acidic range, facilitating selective adsorption of the cadmium ions in the cobalt solution by the adsorption resin.

In an implementation of this application, a contact period for the cobalt solution to pass through the column is controlled to be greater than or equal to one hour. Controlling the contact period to be appropriate for passing the cobalt solution through the column can make the adsorption resin better adsorb the cadmium ions.

In an implementation of this application, an operating temperature for passing through the column is 10°C to 30°C; and an operating temperature for the static adsorption is 10°C to 30°C. The adsorption process in embodiments of this application can be performed at a normal temperature of 10°C to 30°C, so that the process is highly operable and implementable.

In an implementation of this application, a stirring or agitation operation is performed during the static adsorption. The stirring or agitation operation can strengthen the contact between the adsorption resin and the mixed solution, thereby accelerating adsorption of cadmium ions and improving adsorption efficiency.

In an implementation of this application, duration for the static adsorption is 1 to 8 hours. Controlling the adsorption duration to be appropriate facilitates complete adsorption of cadmium ions, improving impurity removal effect.

In an implementation of this application, the adsorption resin is subjected to pretreatment first before the adsorption resin is used to adsorb the cadmium ions, where the pretreatment includes: immersing the adsorption resin in saturated brine for 18 to 20 hours, and washing the adsorption resin with water until discharged water is not yellow; then immersing the adsorption resin in a dilute hydrochloric acid solution for 4 to 8 hours, and washing the adsorption resin with water until the adsorption resin is nearly neutral; and finally immersing the adsorption resin in 2% to 4% of sodium hydroxide solution for 4 to 8 hours, and washing the adsorption resin with water until the adsorption resin is neutral for use. Various impurities can be effectively removed from the adsorption resin through the foregoing pretreatment, improving adsorption effect of the adsorption resin.

In an implementation of this application, a concentration ratio of the cobalt ions to the cadmium ions is (10000-3000000):1 after the acidic cobalt solution containing the cadmium ions is subjected to cadmium removal by using the adsorption resin. In some embodiments, after the acidic cobalt solution containing the cadmium ions is subjected to cadmium removal by using the adsorption resin, the concentration ratio of the cobalt ions to the cadmium ions may be specifically, for example, 10000:1, 20000:1, 50000:1, 80000:1, 100000:1, 200000:1, 500000:1, 800000:1, 1000000:1, 1500000:1, 2000000:1, 2500000:1, or 3000000:1. The relative concentration of the cadmium ions in the acidic cobalt solution can be reduced to an extremely low level by using the thioureido- or isothioureido-containing macroporous adsorption resin in embodiments of this application, indicating that the adsorption resin has very high selective adsorption effect on cadmium ions in the cobalt solution system.

In an implementation of this application, the concentration of the cadmium ions is less than 10 ppb after the acidic cobalt solution containing the cadmium ions is subjected to cadmium removal by using the adsorption resin. In some implementations, the concentration of the cadmium ions is less than or equal to 5 ppb after the acidic cobalt solution containing the cadmium ions is subjected to cadmium removal by using the adsorption resin. In some implementations, the concentration of the cadmium ions is less than or equal to 2 ppb after the acidic cobalt solution containing the cadmium ions is subjected to cadmium removal by using the adsorption resin. In some implementations, the concentration of the cadmium ions is less than or equal to 1 ppb after the acidic cobalt solution containing the cadmium ions is subjected to cadmium removal by using the adsorption resin. The concentration of the cadmium ions in the acidic cobalt solution can be reduced to a ppb level by using the thioureido- or isothioureido-containing macroporous adsorption resin in embodiments of this application, thereby effectively resolving problems in the conventional technology of incomplete cadmium separation from an acidic cobalt solution containing cadmium ions, and a complex operation process.

In an implementation of this application, a cadmium removal rate of the adsorption resin for the acidic cobalt solution containing the cadmium ions is greater than or equal to 99%. In some implementations, the cadmium removal rate of the adsorption resin used for removing the cadmium ions from the solution containing the cadmium ions is greater than or equal to 99.9%. The removal of the cadmium ions from the cobalt solution by using the thioureido- or isothioureido-containing macroporous adsorption resin in embodiments of this application can achieve a high cadmium removal rate and good cadmium removal effect.

In an implementation of this application, the cobalt solution includes an acidic cobalt electroplating solution in an advanced process node, or a battery-grade acidic cobalt solution. Cobalt has low resistance, and hardly diffuses in a silicon wafer compared with copper. The use of the cobalt metal as an interconnect material can reduce electromigration, and reduce diffusion without a high-resistance barrier layer, facilitating reduction of a chip package size. The cobalt electroplating solution is an important raw material for preparing a cobalt metal interconnection structure, so that purity of the cobalt electroplating solution directly affects performance of the cobalt metal interconnection structure. Cadmium ions are removed, by using the thioureido- or isothioureido-containing macroporous adsorption resin in embodiments of this application, from the acidic cobalt electroplating solution required in the advanced process node of an integrated circuit, so that the acidic cobalt electroplating solution is purified and the purity of the cobalt solution is improved. In this case, an electroplated cobalt layer with higher purity and higher quality can be obtained through electroplating, thereby improving performance of a semiconductor device. The battery-grade acidic cobalt solution may be, but is not limited to, a cobalt sulfate solution. A positive electrode material is one of key materials that determine battery performance. Currently, commonly used lithium-ion positive electrode materials primarily include lithium cobaltate, lithium iron phosphate, lithium manganate, a multi-element material, and the like. Cobalt sulfate is an important raw material for preparing a precursor of a positive electrode material of a battery. With the improvement of requirements for safety performance of batteries, a content of impurities in cobalt sulfate is increasingly strictly limited. Cadmium ions are removed, by using the thioureido- or isothioureido-containing macroporous adsorption resin in embodiments of this application, from the cobalt sulfate solution, the raw material for the precursor of the positive electrode material of the battery, so that the purity of the cobalt sulfate solution can be improved, thereby improving performance of the positive electrode material, and further improving electrochemical performance and safety performance of the battery.

In an implementation of this application, the method for removing impurities further includes: after the adsorption resin is saturated, regenerating the adsorption resin in the following manner: immersing the adsorption resin in a dilute hydrochloric acid solution for 4 to 8 hours, and washing the adsorption resin until the adsorption resin is nearly neutral; and then immersing the adsorption resin in 2 wt% to 4 wt% of sodium hydroxide solution for 4 to 8 hours, and washing the adsorption resin until the adsorption resin is neutral for use. The dilute hydrochloric acid may be, for example, hydrochloric acid with a mass concentration of 5% to 10%. The adsorption resin with the cadmium ions adsorbed is regenerated by using the foregoing regeneration method, so that the adsorption resin can be reused.

A second aspect of embodiments of this application provides use of adsorption resin in removing cadmium ions from a solution, where the adsorption resin is thioureido- or isothioureido-containing adsorption resin, and the adsorption resin is used for removing cadmium ions from a solution containing the cadmium ions. In embodiments of this application, the cadmium ions are removed from the solution by using the macroporous adsorption resin of a specific thioureido- or isothioureido-containing structure, so that cadmium impurity ions can be selectively removed from the solution containing the cadmium ions through a simple adsorption operation process.

In an implementation of this application, the adsorption resin is thioureido- or isothioureido-containing macroporous adsorption resin of a styrene-divinylbenzene copolymer. The cadmium impurity ions can be well removed selectively from the solution containing the cadmium ions by using the thioureido- or isothioureido-containing macroporous adsorption resin of the styrene-divinylbenzene copolymer, achieving excellent cadmium removal effect.

In an implementation of this application, the adsorption resin has a specific surface area of 500 m²/g to 1500 m²/g and an average pore size of 0.3 mm to 1.5 mm. The specific surface area is for each gram of dry resin. The adsorption resin has an appropriate specific surface area and an appropriate average pore size, facilitating adsorption and removal of the cadmium impurity ions from the solution.

In an implementation of this application, the solution containing the cadmium ions includes an acidic cobalt solution containing the cadmium ions, a nickel sulfate solution containing the cadmium ions, a ferric sulfate solution containing the cadmium ions, a ferrous sulfate solution containing the cadmium ions, a calcium chloride solution containing the cadmium ions, a magnesium chloride solution containing the cadmium ions, or a sodium chloride solution containing the cadmium ions. Good cadmium removal effect can be achieved by using the thioureido- or isothioureido-containing macroporous adsorption resin for the solution containing the cadmium ions.

In an implementation of this application, a method for the use includes filling a column with the adsorption resin, and passing the solution containing the cadmium ions through the column to adsorb the cadmium ions onto the resin; or adding the adsorption resin to the solution containing the cadmium ions for static adsorption, to adsorb the cadmium ions onto the resin. According to the foregoing two adsorption operation methods, the cadmium ions in the solution containing the cadmium ions can be adsorbed based on an adsorption function of the adsorption resin, removing cadmium and obtaining a solution with cadmium removed. The foregoing operation methods have simple processes and are easy to implement.

In an implementation of this application, pH of an effluent after passing through the column is 2.0 to 5.0; and pH of a mixed solution obtained by adding the adsorption resin to the solution containing the cadmium ions is 2.0 to 5.0. The pH of the effluent and the pH of the mixed solution are controlled within an appropriate acidic range, facilitating selective adsorption of the cadmium ions in the solution containing the cadmium ions by the adsorption resin.

In an implementation of this application, a contact period for the solution containing the cadmium ions to pass through the column is controlled to be greater than or equal to one hour. Controlling the contact period to be appropriate for passing the solution containing the cadmium ions through the column can make the adsorption resin better adsorb the cadmium ions.

In an implementation of this application, an operating temperature for passing through the column is 10°C to 30°C; and an operating temperature for the static adsorption is 10°C to 30°C. The adsorption process in embodiments of this application can be performed at a normal temperature of 10°C to 30°C, so that the process is highly operable and implementable.

In an implementation of this application, a stirring or agitation operation is performed during the static adsorption. The stirring or agitation operation can strengthen the contact between the adsorption resin and the mixed solution, thereby accelerating adsorption of cadmium ions and improving adsorption efficiency.

In an implementation of this application, the adsorption resin is used for removing the cadmium ions from an acidic cobalt electroplating solution in an advanced process node; or used for removing the cadmium ions from a battery-grade acidic cobalt solution; or used for removing a micro or trace amount of the cadmium ions from the nickel sulfate solution, the ferric sulfate solution, the ferrous sulfate solution, the calcium chloride solution, the magnesium chloride solution, or the sodium chloride solution. Cadmium ions are removed, by using the thioureido- or isothioureido-containing macroporous adsorption resin in embodiments of this application, from the acidic cobalt electroplating solution required in the advanced process node of an integrated circuit, so that the purity of the cobalt solution can be improved. In this case, an electroplated cobalt layer with higher purity and higher quality can be obtained through electroplating, thereby improving performance of a semiconductor device. Cadmium ions are removed, by using the thioureido- or isothioureido-containing macroporous adsorption resin in embodiments of this application, from the cobalt sulfate solution, the raw material for the precursor of the positive electrode material of the battery, so that the purity of the cobalt sulfate solution can be improved, thereby improving performance of the positive electrode material, and further improving electrochemical performance and safety performance of the battery. The cadmium ions can be removed from the foregoing solution by using the thioureido- or isothioureido-containing macroporous adsorption resin in embodiments of this application, implementing purification of the solution. The micro amount means the content of cadmium ions less than one part per ten thousand and more than one part per million. The trace amount means the content of cadmium ions less than one part per million.

A third aspect of embodiments of this application provides a cobalt solution obtained after impurity removal by using the method for removing impurities according to the first aspect of embodiments of this application, or a cobalt solution obtained through the foregoing use. A concentration of cadmium ions in the cobalt solution is less than 10 ppb. The cobalt solution may be an acidic cobalt electroplating solution obtained after impurity removal in an advanced process node, or a battery-grade acidic cobalt solution obtained after impurity removal, and may be specifically a cobalt sulfate solution, a cobalt chloride solution, a cobalt nitrate solution, a cobalt acetate solution, or the like.

### DESCRIPTION OF EMBODIMENTS

The following specifically describes embodiments of this application.

High-purity cobalt possesses excellent semiconductor properties, magnetic properties, and electrical conductivity, making it a crucial material for preparing magnetic recording media, magnetic recording heads, optoelectronic devices, integrated circuits for magnetic sensors, and other components. The very large-scale integrated circuit industry requires high-purity cobalt as a sputtering target, and preparation of high-purity cobalt requires a high-purity cobalt sulfate solution. Electroplated cobalt interconnection also requires a high-purity cobalt electroplating solution. In addition, preparation of a positive electrode material of a battery also requires a high-purity cobalt solution, and the like. At present, purification methods for removing impurities from a cobalt solution primarily include a chemical precipitation method, an ion exchange method, and a solvent extraction method, primarily for removing metal impurities (such as copper, iron, zinc, aluminum, manganese, calcium, magnesium, and nickel) from the cobalt solution. In a process of purification and removal of impurities, cadmium, a metal element with high biotoxicity, has special chemical properties, making it difficult to purify and separate. Currently, methods for removing cadmium from a cobalt sulfate solution primarily include cadmium precipitation by sulfidation, deep cadmium removal by N235 extraction, and the like. However, these methods involve complex operations and high costs, and in some methods, other impurity ions (for example, chloride ions) may be further introduced, and a concentration of cadmium ions is hardly to be reduced to a ppb level.

To resolve the foregoing problems, embodiments of this application provide a method for removing impurities from a cobalt solution. Cadmium ions are removed from the cobalt solution by using adsorption resin of a specific structure. The impurity removal process is easy to operate and achieves a high cadmium removal rate.

Specifically, an embodiment of this application provides a method for removing impurities from a cobalt solution, including:
filling a column with adsorption resin, and passing a cobalt solution through the column to adsorb cadmium ions from the cobalt solution onto the resin; or
adding adsorption resin to a cobalt solution for static adsorption, to adsorb cadmium ions from the cobalt solution onto the resin, where
the cobalt solution is an acidic cobalt solution containing the cadmium ions, and the adsorption resin is thioureido (-NH-C(=S)-NH₂)- or isothioureido (-S-C(=NH)NH₂)-containing adsorption resin. The isothioureido (-S-C(=NH)NH₂) group is an enol isomer of the thioureido (-NH-C(=S)-NH₂) group. It may be understood that the thioureido (-NH-C(=S)-NH₂) group may be linked to a molecular chain of the adsorption resin by an N atom, for example, the thioureido group is linked to a carbon atom: -CH₂-NH-C(=S)-NH₂; and the isothioureido (-S-C(=NH)NH₂) group may be linked to a molecular chain of the adsorption resin by an S atom, for example, the isothioureido group is linked to a carbon atom: -CH₂-S-C(=NH)NH₂. The thioureido group and the isothioureido group are polar groups. The adsorption resin is chelating resin.

The adsorption resin in this application is thioureido (-NH-C(=S)-NH₂)- or isothioureido (-S-C(=NH)NH₂)-containing macroporous adsorption resin. The macroporous adsorption resin is a separation material that combines principles of adsorption and screening, and has a good macroporous mesh structure and a large specific surface area. The macroporous adsorption resin can be used to perform physical adsorption based on the large specific surface area through the van der Waals force between the macroporous adsorption resin and adsorbed molecules (adsorbate). In embodiments of this application, cadmium impurity ions are removed from the acidic cobalt solution by using the macroporous adsorption resin of a specific thioureido- or isothioureido-containing structure, so that the cadmium impurity ions can be selectively removed through a simple adsorption operation process. This cadmium removal method has a simple process and a high cadmium removal rate. In addition, for an acidic cobalt solution containing cadmium ions with a high concentration of cobalt ions, selective cadmium adsorption can also be implemented by using the macroporous adsorption resin of the specific thioureido- or isothioureido-containing structure in this application, to reduce a concentration of the cadmium impurity ions in the cobalt solution to a ppb (parts per billion) level, thereby resolving problems in the conventional technology of incomplete cadmium separation from an acidic cobalt solution containing cadmium ions, and a complex operation process.

In an implementation of this application, the adsorption resin is thioureido- or isothioureido-containing macroporous adsorption resin of a styrene-divinylbenzene copolymer. In embodiments of this application, selective removal of cadmium from the cobalt solution is implemented through synergistic effect of the thioureido or isothioureido group and the styrene-divinylbenzene copolymer. In an implementation of this application, the thioureido- or isothioureido-containing macroporous adsorption resin of the styrene-divinylbenzene copolymer may be obtained by self-preparation, or may be obtained commercially. For example, the thioureido- or isothioureido-containing macroporous adsorption resin of the styrene-divinylbenzene copolymer may be, but is not limited to, a commercially available product of the following brands: DOWEX^{™} XUS 43600, Tulsion^{®} CH-97, Purolite^{®} S920, Purolite^{®} MTS9140, LEWATIT^{®}MonoPlus TP-214, and Suqing D405-II. The cadmium ions can be well removed selectively from the cobalt solution by using the thioureido- or isothioureido-containing macroporous adsorption resin of the styrene-divinylbenzene copolymer, achieving excellent cadmium removal effect.

In an implementation of this application, the adsorption resin has a specific surface area of 500 m²/g to 1500 m²/g and an average pore size of 0.3 mm to 1.5 mm. The specific surface area is for each gram of dry resin. The adsorption resin has an appropriate specific surface area and an appropriate average pore size, facilitating adsorption and removal of the cadmium ions from the cobalt solution. In an implementation of this application, the adsorption resin may be spherical particles, and the adsorption resin may have a volumetric exchange capacity greater than or equal to 1.0 mmol/mL and a water content of 40% to 60%. The adsorption resin has a large volumetric exchange capacity and an appropriate water content, facilitating adsorption and removal of the cadmium ions from the cobalt solution.

In an implementation of this application, the acidic cobalt solution containing the cadmium ions may include a cobalt sulfate solution containing the cadmium ions, a cobalt chloride solution containing the cadmium ions, a cobalt nitrate solution containing the cadmium ions, or a cobalt acetate solution containing the cadmium ions. Good cadmium removal effect can be achieved by using the thioureido- or isothioureido-containing macroporous adsorption resin for the acidic cobalt solutions of different systems containing cadmium ions, thereby meeting application requirements for removing cadmium from various cobalt solutions.

In an implementation of this application, in the acidic cobalt solution containing the cadmium ions, a concentration of cobalt ions is 1 g/L to 100 g/L, and a concentration of the cadmium ions is less than or equal to 5.0 g/L. In some embodiments, the concentration of the cobalt ions may be specifically, for example, 1 g/L, 10 g/L, 20 g/L, 30 g/L, 40 g/L, 50 g/L, 60 g/L, 70 g/L, 80 g/L, 90 g/L, or 100 g/L. In some embodiments, the concentration of the cadmium ions may be 0.01 g/L, 0.05 g/L, 0.5 g/L, 1.0 g/L, 2.0 g/L, 3.0 g/L, 4.0 g/L, or 5.0 g/L. In some embodiments, the concentration of the cadmium ions may be 0.01 g/L to 1.0 g/L. In some embodiments, the concentration of the cadmium ions may be less than or equal to 1.0 g/L. In some embodiments, the concentration of the cadmium ions may be specifically, for example, 0.01 g/L, 0.05 g/L, 0.1 g/L, 0.2 g/L, 0.3 g/L, 0.4 g/L, 0.5 g/L, 0.6 g/L, 0.7 g/L, 0.8 g/L, 0.9 g/L, or 1.0 g/L. In some embodiments, the concentration of the cadmium ions may be less than 0.01 g/L. By using the thioureido- or isothioureido-containing macroporous adsorption resin in embodiments of this application, cadmium ions can be removed from acidic cobalt solutions with different concentrations of cobalt ions, different concentrations of cadmium ions, and different cobalt-cadmium relative concentrations, and good cadmium removal effect can also be achieved for a cobalt solution with a high concentration of cobalt ions.

In an implementation of this application, the method for removing impurities is impurity removal through adsorption by passing through a column. According to the operation method for adsorption by passing through the column in this implementation, the cadmium ions in the cobalt solution containing the cadmium ions can be adsorbed through dynamic adsorption by the adsorption resin, removing cadmium and obtaining a cobalt solution with cadmium removed. This operation method has a simple process and is easy to implement.

In this implementation, pH of an effluent after passing through the column is 2.0 to 5.0, and may be specifically, for example, 2.0, 2.5, 3.0, 3.5, 4.0, 4.5, or 5.0. The pH of the effluent after passing through the column is controlled within a range of 2.0 to 5.0, that is, pH of a mixture of the cobalt solution containing the cadmium ions and the adsorption resin is controlled within the range of 2.0 to 5.0. The pH of the effluent is controlled within an appropriate acidic range, facilitating selective adsorption of the cadmium ions in the cobalt solution by the adsorption resin.

In this implementation, a contact period for the cobalt solution to pass through the column is controlled to be greater than or equal to one hour. Specifically, the contact period for the cobalt solution to pass through the column is controlled to be 1 to 12 hours, such as 1 hour, 2 hours, 3 hours, 5 hours, 8 hours, 10 hours, or 12 hours. Controlling the contact period to be appropriate for passing the cobalt solution through the column can make the adsorption resin better adsorb the cadmium ions and can achieve higher adsorption efficiency.

In this implementation, an operating temperature for passing through the column is 10°C to 30°C. The adsorption process by passing through the column in embodiments of this application can be performed at a normal temperature of 10°C to 30°C, so that the process is highly operable and implementable.

In another implementation of this application, the method for removing impurities is impurity removal through static adsorption. According to the operation method for static adsorption in this implementation, the cadmium ions in the cobalt solution containing the cadmium ions can be adsorbed based on an adsorption function of the adsorption resin, removing cadmium and obtaining a solution with cadmium removed. This operation method has a simple process and is easy to implement.

In this implementation, pH of a mixed solution obtained by adding the adsorption resin to the cobalt solution is 2.0 to 5.0, and may be specifically, for example, 2.0, 2.5, 3.0, 3.5, 4.0, 4.5, or 5.0. The pH of the mixed solution is controlled within an appropriate acidic range, facilitating selective adsorption of the cadmium ions in the cobalt solution containing the cadmium ions by the adsorption resin.

In this implementation, an operating temperature for the static adsorption is 10°C to 30°C. The adsorption process in embodiments of this application can be performed at a normal temperature of 10°C to 30°C, so that the process is highly operable and implementable.

In this implementation, a stirring or agitation operation is performed during the static adsorption. The stirring or agitation operation can strengthen the contact between the adsorption resin and the mixed solution, thereby accelerating adsorption of cadmium ions and improving adsorption efficiency.

In this implementation, duration for the static adsorption is 1 to 8 hours, and may be specifically, for example, 1 hour, 2 hours, 3 hours, or 5 hours. The appropriate adsorption duration can make the adsorption resin better adsorb the cadmium ions and can achieve higher adsorption efficiency.

In an implementation of this application, the adsorption resin is subjected to pretreatment first before the adsorption resin is used to adsorb the cadmium ions, where the pretreatment includes: immersing the adsorption resin in saturated brine for 18 to 20 hours, and washing the adsorption resin with water until discharged water is not yellow; then immersing the adsorption resin in a dilute hydrochloric acid solution for 4 to 8 hours, and washing the adsorption resin with water until the adsorption resin is nearly neutral; and finally immersing the adsorption resin in 2 wt% to 4 wt% of sodium hydroxide solution for 4 to 8 hours, and washing the adsorption resin with water until the adsorption resin is neutral for use. The dilute hydrochloric acid may be, for example, hydrochloric acid with a mass concentration of 5% to 10%. Various impurities can be effectively removed from the adsorption resin through the foregoing pretreatment, improving adsorption effect of the adsorption resin.

In an implementation of this application, a concentration ratio of the cobalt ions to the cadmium ions can be (10000-3000000):1 after the acidic cobalt solution containing the cadmium ions is subjected to cadmium removal by using the adsorption resin, reaching a high cobalt-cadmium ratio. In some embodiments, after the acidic cobalt solution containing the cadmium ions is subjected to cadmium removal by using the adsorption resin, the concentration ratio of the cobalt ions to the cadmium ions may be specifically, for example, 10000:1, 20000:1, 50000:1, 80000:1, 100000:1, 200000:1, 500000:1, 800000:1, 1000000:1, 1500000:1, 2000000:1, 2500000:1, or 3000000:1. The relative concentration of the cadmium ions in the acidic cobalt solution can be reduced to an extremely low level by using the thioureido- or isothioureido-containing macroporous adsorption resin in embodiments of this application, indicating that the adsorption resin has very high selective adsorption effect on cadmium ions in the cobalt solution system.

In an implementation of this application, the concentration of the cadmium ions is less than 10 ppb after the acidic cobalt solution containing the cadmium ions is subjected to cadmium removal by using the adsorption resin. In some implementations, the concentration of the cadmium ions is less than or equal to 5 ppb after the acidic cobalt solution containing the cadmium ions is subjected to cadmium removal by using the adsorption resin. In some implementations, the concentration of the cadmium ions is less than or equal to 2 ppb after the acidic cobalt solution containing the cadmium ions is subjected to cadmium removal by using the adsorption resin. In some implementations, the concentration of the cadmium ions is less than or equal to 1 ppb after the acidic cobalt solution containing the cadmium ions is subjected to cadmium removal by using the adsorption resin. The concentration of the cadmium ions in the acidic cobalt solution can be reduced to a ppb level by using the thioureido- or isothioureido-containing macroporous adsorption resin in embodiments of this application, thereby effectively resolving problems in the conventional technology of incomplete cadmium separation from an acidic cobalt solution containing cadmium ions, and a complex operation process.

In an implementation of this application, the cadmium removal rate of the adsorption resin used for removing the cadmium ions from the solution containing the cadmium ions is greater than or equal to 99%. In some implementations, the cadmium removal rate of the adsorption resin used for removing the cadmium ions from the solution containing the cadmium ions is greater than or equal to 99.9%. The removal of the cadmium ions from the solution containing the cadmium ions by using the thioureido- or isothioureido-containing macroporous adsorption resin in embodiments of this application can achieve a high cadmium removal rate and good cadmium removal effect.

In an implementation of this application, the cobalt solution may be an acidic cobalt electroplating solution in an advanced process node, or may be a battery-grade acidic cobalt solution, or may be an acidic cobalt solution in another application scenario.

In an implementation of this application, the cobalt solution is an acidic cobalt electroplating solution in an advanced process node. Cobalt has low resistance, and hardly diffuses in a silicon wafer compared with copper. The use of the cobalt metal as an interconnect material can reduce electromigration, and reduce diffusion without a high-resistance barrier layer, facilitating reduction of a chip package size. The cobalt electroplating solution is an important raw material for preparing a cobalt metal interconnection structure, so that purity of the cobalt electroplating solution directly affects performance of the cobalt metal interconnection structure. Cadmium ions are removed, by using the thioureido- or isothioureido-containing macroporous adsorption resin in embodiments of this application, from the acidic cobalt electroplating solution required in the advanced process node of an integrated circuit, so that the acidic cobalt electroplating solution is purified and the purity of the cobalt solution is improved. In this case, an electroplated cobalt layer with higher purity and higher quality can be obtained through electroplating, thereby improving performance of a semiconductor device.

In another implementation of this application, the cobalt solution is a battery-grade acidic cobalt solution. The battery-grade acidic cobalt solution may be, but is not limited to, a cobalt sulfate solution. A positive electrode material is one of key materials that determine battery performance. Currently, commonly used lithium-ion positive electrode materials primarily include lithium cobaltate, lithium iron phosphate, lithium manganate, a multi-element material, and the like. Cobalt sulfate is an important raw material for preparing a precursor of a positive electrode material of a battery. With the improvement of requirements for safety performance of batteries, a content of impurities in cobalt sulfate is increasingly strictly limited. Cadmium ions are removed, by using the thioureido- or isothioureido-containing macroporous adsorption resin in embodiments of this application, from the cobalt sulfate solution, the raw material for the precursor of the positive electrode material of the battery, so that the purity of the cobalt sulfate solution can be improved, thereby improving performance of the positive electrode material, and further improving electrochemical performance and safety performance of the battery.

In an implementation of this application, the method for removing impurities further includes: after the adsorption resin is saturated, regenerating the adsorption resin in the following manner: immersing the adsorption resin in a dilute hydrochloric acid solution for 4 to 8 hours, and washing the adsorption resin until the adsorption resin is nearly neutral; and then immersing the adsorption resin in 2 wt% to 4 wt% of sodium hydroxide solution for 4 to 8 hours, and washing the adsorption resin until the adsorption resin is neutral for use. The dilute hydrochloric acid may be, for example, hydrochloric acid with a mass concentration of 5% to 10%. The adsorption resin with the cadmium ions adsorbed is regenerated by using the foregoing regeneration method, so that the adsorption resin can be reused.

An embodiment of this application further provides use of adsorption resin in removing cadmium ions from a solution, where the adsorption resin is the thioureido- or isothioureido-containing macroporous adsorption resin, and the adsorption resin is used for selectively removing cadmium ions from a solution containing the cadmium ions. In embodiments of this application, the cadmium ions are removed from the solution by using the macroporous adsorption resin of a specific thioureido- or isothioureido-containing structure, so that cadmium impurity ions can be selectively removed from the solution containing the cadmium ions through a simple adsorption operation process. The cadmium removal process is easy to operate and achieves a high cadmium removal rate.

It may be understood that, in the use of the adsorption resin in removing cadmium impurity ions from the solution in embodiments of this application, for related descriptions of the adsorption resin, refer to the foregoing description. Details are not described herein again.

In an implementation of this application, the solution containing the cadmium ions includes an acidic cobalt solution containing the cadmium ions, a nickel sulfate solution containing the cadmium ions, a ferric sulfate solution containing the cadmium ions, a ferrous sulfate solution containing the cadmium ions, a calcium chloride solution containing the cadmium ions, a magnesium chloride solution containing the cadmium ions, or a sodium chloride solution containing the cadmium ions. Good cadmium removal effect can be achieved by using the thioureido- or isothioureido-containing macroporous adsorption resin for the solution containing the cadmium impurity ions.

In an implementation of this application, a method for the use may include filling a column with the adsorption resin, and passing the solution containing the cadmium ions through the column to adsorb the cadmium ions onto the resin; or adding the adsorption resin to the solution containing the cadmium ions for static adsorption, to adsorb the cadmium ions onto the resin. According to these two adsorption operation methods, the cadmium ions in the solution containing the cadmium ions can be adsorbed based on an adsorption function of the adsorption resin, removing cadmium and obtaining a solution with cadmium removed. The operation methods have simple processes and are easy to implement.

In an implementation of this application, pH of an effluent after passing through the column is 2.0 to 5.0; and pH of a mixed solution obtained by adding the adsorption resin to the solution containing the cadmium ions is 2.0 to 5.0, specifically, such as 2.0, 2.5, 3.0, 3.5, 4.0, 4.5, or 5.0. The pH of the effluent and the pH of the mixed solution are controlled within an appropriate acidic range, facilitating selective adsorption of the cadmium ions in the solution containing the cadmium ions by the adsorption resin.

In an implementation of this application, a contact period for the solution containing the cadmium ions to pass through the column is controlled to be greater than or equal to one hour. Specifically, the contact period for the cobalt solution to pass through the column is controlled to be 1 hour, 2 hours, 3 hours, or the like. Controlling the contact period to be appropriate for passing the solution containing the cadmium ions through the column can make the adsorption resin better adsorb the cadmium ions.

It may be understood that, in the use of the adsorption resin in removing cadmium impurity ions from the solution in embodiments of this application, for related descriptions of the operation for adsorption by passing through the column and the operation for static adsorption, refer to the foregoing description. Details are not described herein again.

In an implementation of this application, the adsorption resin is used for removing the cadmium ions from an acidic cobalt electroplating solution in an advanced process node; or used for removing the cadmium ions from a battery-grade acidic cobalt solution; or used for removing a micro or trace amount of the cadmium ions from the nickel sulfate solution, the ferric sulfate solution, the ferrous sulfate solution, the calcium chloride solution, the magnesium chloride solution, or the sodium chloride solution. Cadmium ions are removed, by using the thioureido- or isothioureido-containing macroporous adsorption resin in embodiments of this application, from the acidic cobalt electroplating solution required in the advanced process node of an integrated circuit, so that the purity of the cobalt solution can be improved. In this case, an electroplated cobalt layer with higher purity and higher quality can be obtained through electroplating, thereby improving performance of a semiconductor device. Cadmium ions are removed, by using the thioureido- or isothioureido-containing macroporous adsorption resin in embodiments of this application, from the cobalt sulfate solution, the raw material for the precursor of the positive electrode material of the battery, so that the purity of the cobalt sulfate solution can be improved, thereby improving performance of the positive electrode material, and further improving electrochemical performance and safety performance of the battery. The cadmium ions can be removed from the foregoing solution by using the thioureido- or isothioureido-containing macroporous adsorption resin in embodiments of this application, implementing purification of the solution. The micro amount means the content of cadmium ions less than one part per ten thousand and more than one part per million. The trace amount means the content of cadmium ions less than one part per million.

An embodiment of this application further provides a cobalt solution obtained after impurity removal by using the foregoing method for removing impurities according to embodiments of this application, or a cobalt solution obtained through the foregoing use. The cobalt solution may be an acidic cobalt electroplating solution obtained after impurity removal in an advanced process node, or a battery-grade acidic cobalt solution obtained after impurity removal, or an acidic cobalt solution in another application scenario, and may be specifically a cobalt sulfate solution, a cobalt chloride solution, a cobalt nitrate solution, a cobalt acetate solution, or the like. A concentration of cadmium ions in the cobalt solution is less than 10 ppb. In some implementations, the concentration of the cadmium ions is less than or equal to 5 ppb. In some implementations, the concentration of the cadmium ions is less than or equal to 2 ppb. In some implementations, the concentration of the cadmium ions is less than or equal to 1 ppb. In the cobalt solution, a concentration ratio of the cobalt ions to the cadmium ions may be (10000-3000000):1. In some embodiments, in the cobalt solution, the concentration ratio of the cobalt ions to the cadmium ions may be specifically, for example, 10000:1, 20000:1, 50000:1, 80000:1, 100000:1, 200000:1, 500000:1, 800000:1, 1000000:1, 1500000:1, 2000000:1, 2500000:1, or 3000000:1. The cadmium ions can be well removed from the cobalt solution by using the thioureido- or isothioureido-containing macroporous adsorption resin in embodiments of this application, implementing purification of the cobalt solution.

The following further describes embodiments of this application by using a plurality of embodiments.

### Embodiment 1

A method for removing cadmium impurity ions from a cobalt sulfate solution includes the following steps:
Step 1: Prepare 1000 mL of cobalt sulfate solution, where a concentration of cobalt ions is 80 g/L, and a concentration of cadmium ions is 0.2 g/L.
Step 2: Pretreat adsorption resin, where the adsorption resin is weakly acidic thioureido- or isothioureido-containing macroporous adsorption resin of a styrene-divinylbenzene copolymer. A pretreatment process is as follows. First, the adsorption resin to be treated is immersed in saturated brine in a volume about twice or more of a volume of the adsorption resin for 18 to 20 hours, and then washed with clean water until discharged water is not yellow. Then, the adsorption resin is immersed in 5 wt% of hydrochloric acid solution for 4 to 8 hours, and then washed with clean water until the adsorption resin is nearly neutral. Finally, the adsorption resin is immersed in 2 wt% to 4 wt% of sodium hydroxide solution for 4 to 8 hours, and then washed with clean water until the adsorption resin is neutral for use.
Step 3: Mix the adsorption resin pretreated in step 2 and the cobalt sulfate solution at a volume ratio of 1:10 to obtain a mixed solution, where pH of the mixed solution is 2.0 to 5.0, and stir the mixed solution at room temperature to perform static adsorption for 2 hours, to obtain a purified cobalt sulfate solution.

The purified cobalt sulfate solution obtained in step 3 is tested. The concentration of the cadmium ions is 0.98 ppb, and a cadmium removal rate reaches 99.9%.

### Embodiment 2

A method for removing cadmium impurity ions from a cobalt sulfate solution includes the following steps:
Step 1: Prepare 1000 mL of cobalt sulfate solution, where a concentration of cobalt ions is 100 g/L, and a concentration of cadmium ions is 0.48 g/L.
Step 2: Pretreat adsorption resin, where the adsorption resin is weakly acidic thioureido- or isothioureido-containing macroporous adsorption resin of a styrene-divinylbenzene copolymer. A pretreatment process is the same as that in Embodiment 1.
Step 3: Fill a column with 100 mL of the adsorption resin pretreated in step 2, perform dynamic adsorption on the cobalt sulfate solution according to a contact period of 1 h, and collect an effluent at each hour, where a pH value of the effluent is 3.0 to 5.0, and total adsorption duration is 10 h.

The purified cobalt sulfate solution obtained in step 3 is tested. The concentration of the cadmium ions is 1.6 ppb, and a cadmium removal rate reaches 99.9%.

### Embodiment 3

A method for removing cadmium impurity ions from a cobalt sulfate solution includes the following steps:
Step 1: Prepare 1000 mL of cobalt sulfate solution, where a concentration of cobalt ions is 50 g/L, and a concentration of cadmium ions is 0.06 g/L.
Step 2: Pretreat adsorption resin, where the adsorption resin is weakly acidic thioureido- or isothioureido-containing macroporous adsorption resin of a styrene-divinylbenzene copolymer. A pretreatment process is the same as that in Embodiment 1.
Step 3: Mix the adsorption resin pretreated in step 2 and the cobalt sulfate solution at a volume ratio of 1:5 to obtain a mixed solution, where pH of the mixed solution is 3.0 to 5.0, and stir the mixed solution at room temperature to perform static adsorption for 3 hours, to obtain a purified cobalt sulfate solution.

The purified cobalt sulfate solution obtained in step 3 is tested. The concentration of the cadmium ions is 0.72 ppb, and a cadmium removal rate reaches 99.9%.

### Embodiment 4

A method for removing cadmium impurity ions from a cobalt sulfate solution includes the following steps:
Step 1: Prepare 5000 mL of cobalt sulfate solution, where a concentration of cobalt ions is 80 g/L, and a concentration of cadmium ions is 0.5 g/L.
Step 2: Pretreat adsorption resin, where the adsorption resin is weakly acidic thioureido- or isothioureido-containing macroporous adsorption resin of a styrene-divinylbenzene copolymer. A pretreatment process is the same as that in Embodiment 1.
Step 3: Fill a column with 100 mL of the adsorption resin pretreated in step 2, perform dynamic adsorption on the cobalt sulfate solution according to a contact period of 2 h, and collect an effluent at each hour, where a pH value of the effluent is 3.0 to 5.0, and total adsorption duration is 100 h.

The purified cobalt sulfate solution obtained in step 3 is tested. The concentration of the cadmium ions is 1.0 ppb, and a cadmium removal rate reaches 99.9%.

### Comparative Example 1

A method for removing cadmium impurity ions from a cobalt sulfate solution includes the following steps:
Step 1: Prepare 1000 mL of cobalt sulfate solution, where a concentration of cobalt ions is 30 g/L, and a concentration of cadmium ions is 0.18 g/L.
Step 2: Pretreat adsorption resin, where a pretreatment operation is the same as that in Embodiment 1, and the adsorption resin is adsorption resin with an iminodiacetic acid functional group on a macroporous styrene-divinylbenzene copolymer, for example, Hangzhou Zhengguang resin D851.
Step 3: Mix the adsorption resin pretreated in step 2 and the cobalt sulfate solution at a volume ratio of 1:6 to obtain a mixed solution, where pH of the mixed solution is 2.0 to 5.0, and stir the mixed solution at room temperature to perform adsorption for 2 h, to obtain a purified cobalt sulfate solution.

The purified cobalt sulfate solution obtained in step 3 is tested. The concentration of the cadmium ions is 135 ppm, and a cadmium removal rate is 25%.

### Comparative Example 2

A method for removing cadmium impurity ions from a cobalt sulfate solution includes the following steps:
Step 1: Prepare 5000 mL of cobalt sulfate solution, where a concentration of cobalt ions is 80 g/L, and a concentration of cadmium ions is 0.2 g/L.
Step 2: Pretreat strongly acidic resin, where a pretreatment operation is the same as that in Embodiment 1, and the resin is common 001×7 (732) strongly acidic styrene cation exchange resin, with a sulfonic acid group on a styrene-divinylbenzene copolymer.
Step 3: Fill a column with 100 mL of the strongly acidic resin pretreated in step 2, perform dynamic adsorption on the cobalt sulfate solution according to a contact period of 2 h, and collect an effluent at each hour, where a pH value of the effluent is 3.0 to 5.0, and total adsorption duration is 25 h.

The purified cobalt sulfate solution obtained in step 3 is tested. The concentration of the cadmium ions is 0.15 g/L, and a cadmium removal rate is 25%.

It can be learned from Embodiment 1 to Embodiment 4 as well as Comparative Example 1 and Comparative Example 2 that, in embodiments of this application, the cadmium ions are removed from the acidic cobalt solution by using the thioureido- or isothioureido-containing macroporous adsorption resin of the styrene-divinylbenzene copolymer, so that the cadmium ions can be selectively removed from the cobalt solution containing the cadmium ions through a simple adsorption operation process, the cadmium removal rate is high, and the concentration of cadmium ions in a cobalt solution with a high concentration of cobalt ions can also be reduced to a ppb level. However, the resin in Comparative Example 1 and the resin in Comparative Example 2 have low selective removal capabilities for cadmium.

It should be understood that "first", "second", and various numbers in this specification are merely used for differentiation for ease of description, but are not intended to limit the scope of this application.

In this application, "and/or" describes an association relationship between associated objects, and indicates that three relationships may exist. For example, A and/or B may indicate that: only A exists, both A and B exist, and only B exists, where A and B may be singular or plural. The character "/" generally indicates an "or" relationship between the associated objects.

In this application, "at least one" means one or more, and "a plurality of' means two or more. "At least one of the following items (pieces)" or a similar expression thereof means any combination of these items, including a single item (piece) or any combination of a plurality of items (pieces). For example, "at least one of a, b, or c" or "at least one of a, b, and c" may indicate: a, b, c, a-b (namely, a and b), a-c, b-c, or a-b-c, where a, b, and c may be singular or plural.

It should be understood that sequence numbers of the foregoing processes do not mean an execution sequence in various embodiments of this application. Some or all of the steps may be performed in parallel or in sequence. The execution sequence of the processes should be determined based on functions and internal logic of the processes, and should not be construed as any limitation on the implementation processes of embodiments of this application.

## Claims

1. A method for removing impurities from a cobalt solution, comprising:
filling a column with adsorption resin, and passing a cobalt solution through the column to adsorb cadmium ions from the cobalt solution onto the resin; or
adding adsorption resin to a cobalt solution for static adsorption, to adsorb cadmium ions from the cobalt solution onto the resin, wherein
the cobalt solution is an acidic cobalt solution containing the cadmium ions, and the adsorption resin is thioureido- or isothioureido-containing adsorption resin.

2. The method for removing impurities according to claim 1, wherein the adsorption resin is thioureido- or isothioureido-containing macroporous adsorption resin of a styrene-divinylbenzene copolymer.

3. The method for removing impurities according to claim 1 or 2, wherein the adsorption resin is spherical particles with a specific surface area of 500 m²/g to 1500 m²/g and an average pore size of 0.3 mm to 1.5 mm.

4. The method for removing impurities according to any one of claims 1 to 3, wherein the adsorption resin has a volumetric exchange capacity greater than or equal to 1.0 mmol/mL and a water content of 40% to 60%.

5. The method for removing impurities according to any one of claims 1 to 4, wherein the acidic cobalt solution containing the cadmium ions comprises a cobalt sulfate solution containing the cadmium ions, a cobalt chloride solution containing the cadmium ions, a cobalt nitrate solution containing the cadmium ions, or a cobalt acetate solution containing the cadmium ions.

6. The method for removing impurities according to any one of claims 1 to 5, wherein in the acidic cobalt solution containing the cadmium ions, a concentration of cobalt ions is 1 g/L to 100 g/L, and a concentration of the cadmium ions is less than or equal to 5.0 g/L.

7. The method for removing impurities according to any one of claims 1 to 6, wherein pH of an effluent after passing through the column is 2.0 to 5.0; and pH of a mixed solution obtained by adding the adsorption resin to the cobalt solution is 2.0 to 5.0.

8. The method for removing impurities according to any one of claims 1 to 7, wherein a contact period for the cobalt solution to pass through the column is controlled to be greater than or equal to one hour.

9. The method for removing impurities according to any one of claims 1 to 8, wherein an operating temperature for passing through the column is 10°C to 30°C; and an operating temperature for the static adsorption is 10°C to 30°C.

10. The method for removing impurities according to any one of claims 1 to 9, wherein a stirring or agitation operation is performed during the static adsorption.

11. The method for removing impurities according to any one of claims 1 to 10, wherein the adsorption resin is subjected to pretreatment first before the adsorption resin is used to adsorb the cadmium ions, wherein the pretreatment comprises: immersing the adsorption resin in saturated brine for 18 to 20 hours, and washing the adsorption resin with water until discharged water is not yellow; then immersing the adsorption resin in a dilute hydrochloric acid solution for 4 to 8 hours, and washing the adsorption resin with water until the adsorption resin is nearly neutral; and finally immersing the adsorption resin in 2 wt% to 4 wt% of sodium hydroxide solution for 4 to 8 hours, and washing the adsorption resin with water until the adsorption resin is neutral for use.

12. The method for removing impurities according to any one of claims 1 to 11, wherein a concentration ratio of the cobalt ions to the cadmium ions is (10000-3000000):1 after the acidic cobalt solution containing the cadmium ions is subjected to cadmium removal by using the adsorption resin.

13. The method for removing impurities according to any one of claims 1 to 12, wherein the concentration of the cadmium ions is less than 10 ppb after the acidic cobalt solution containing the cadmium ions is subjected to cadmium removal by using the adsorption resin.

14. The method for removing impurities according to any one of claims 1 to 13, wherein a cadmium removal rate of the adsorption resin for the acidic cobalt solution containing the cadmium ions is greater than or equal to 99%.

15. The method for removing impurities according to any one of claims 1 to 14, wherein the cobalt solution comprises an acidic cobalt electroplating solution in an advanced process node, or a battery-grade acidic cobalt solution.

16. The method for removing impurities according to any one of claims 1 to 15, further comprising: after the adsorption resin is saturated, regenerating the adsorption resin in the following manner: immersing the adsorption resin in a dilute hydrochloric acid solution for 4 to 8 hours, and washing the adsorption resin until the adsorption resin is nearly neutral; and then immersing the adsorption resin in 2 wt% to 4 wt% of sodium hydroxide solution for 4 to 8 hours, and washing the adsorption resin until the adsorption resin is neutral for use.

17. Use of adsorption resin in removing cadmium ions from a solution, wherein the adsorption resin is thioureido- or isothioureido-containing adsorption resin, and the adsorption resin is used for removing cadmium ions from a solution containing the cadmium ions.

18. The use according to claim 17, wherein the adsorption resin is thioureido- or isothioureido-containing macroporous adsorption resin of a styrene-divinylbenzene copolymer.

19. The use according to claim 17 or 18, wherein the adsorption resin has a specific surface area of 500 m²/g to 1500 m²/g and an average pore size of 0.3 mm to 1.5 mm.

20. The use according to any one of claims 17 to 19, wherein the solution containing the cadmium ions comprises an acidic cobalt solution containing the cadmium ions, a nickel sulfate solution containing the cadmium ions, a ferric sulfate solution containing the cadmium ions, a ferrous sulfate solution containing the cadmium ions, a calcium chloride solution containing the cadmium ions, a magnesium chloride solution containing the cadmium ions, or a sodium chloride solution containing the cadmium ions.

21. The use according to any one of claims 17 to 20, wherein a method for the use comprises filling a column with the adsorption resin, and passing the solution containing the cadmium ions through the column to adsorb the cadmium ions onto the resin; or adding the adsorption resin to the solution containing the cadmium ions for static adsorption, to adsorb the cadmium ions onto the resin.

22. The use according to claim 21, wherein pH of an effluent after passing through the column is 2.0 to 5.0; and pH of a mixed solution obtained by adding the adsorption resin to the solution containing the cadmium ions is 2.0 to 5.0.

23. The use according to claim 21 or 22, wherein a contact period for the solution containing the cadmium ions to pass through the column is controlled to be greater than or equal to one hour.

24. The use according to any one of claims 21 to 23, wherein an operating temperature for passing through the column is 10°C to 30°C; and an operating temperature for the static adsorption is 10°C to 30°C.

25. The use according to any one of claims 21 to 24, wherein a stirring or agitation operation is performed during the static adsorption.

26. The use according to any one of claims 17 to 25, wherein the adsorption resin is used for removing the cadmium ions from an acidic cobalt electroplating solution in an advanced process node; or used for removing the cadmium ions from a battery-grade acidic cobalt solution; or used for removing a micro or trace amount of the cadmium ions from the nickel sulfate solution, the ferric sulfate solution, the ferrous sulfate solution, the calcium chloride solution, the magnesium chloride solution, or the sodium chloride solution.

27. A cobalt solution obtained after impurity removal by using the method for removing impurities according to any one of claims 1 to 16, or a cobalt solution obtained through the use according to any one of claims 17 to 26, wherein a concentration of cadmium ions in the cobalt solution is less than 10 ppb.
